# EUROPÄISCHE PATENTANMELDUNG

(11) **EP 2 211 029 A1**
(43) Veröffentlichungstag der Anmeldung: **28.07.2010**
(21) Anmeldenummer: 08007788.6
(22) Anmeldetag: 22.04.2008
(51) Int. Cl.: F01K 23/10

(54) **Gas- und Dampfturbinenanlage**

(71) Anmelder: SIEMENS AKTIENGESELLSCHAFT, 80333 München (DE)
(72) Erfinder: Schubert, Falko, Dr., 91301 Forchheim (DE)

(57) **Zusammenfassung**

Eine Gas- und Dampfturbinenanlage mit einem der Gasturbine rauchgasseitig nachgeschalteten Abhitzedampferzeuger, dessen Heizflächen in den Wasser-Dampf-Kreislauf (1) der Dampfturbine geschaltet sind, wobei der Wasser-Dampf-Kreislauf einen Kondensator (2) mit einer nachgeschalteten Kondensatpumpenanordnung (4) umfasst, soll einen möglichst geringen Konstruktionsaufwand erfordern. Dazu ist die Kondensatpumpenanordnung (4) mehrstufig ausgeführt.

## Beschreibung

Die Erfindung betrifft eine Gas- und Dampfturbinenanlage mit einem der Gasturbine rauchgasseitig nachgeschalteten Abhitzedampferzeuger, dessen Heizflächen in den Wasser-Dampf-Kreislauf der Dampfturbine geschaltet sind, wobei der Wasser-Dampf-Kreislauf einen Kondensator mit einer nachgeschalteten Kondensatpumpenanordnung umfasst.

Gas- und Dampfturbinenanlagen (GuD-Anlagen) dienen überwiegend der Stromerzeugung. Dabei umfasst eine moderne GuD-Anlage üblicherweise ein bis vier Gasturbinen und mindestens eine Dampfturbine, wobei entweder jede Turbine jeweils einen Generator antreibt (Mehrwellenanlage) oder eine Gasturbine mit der Dampfturbine auf einer gemeinsamen Welle einen einzigen Generator antreibt (Einwellenanlage). Die heißen Abgase der Gasturbine werden dabei in einem Abhitzedampferzeuger zur Erzeugung von Wasserdampf verwendet. Der Dampf wird anschließend der Dampfturbine zugeführt. Üblicherweise entfallen ca. zwei Drittel der elektrischen Leistung auf die Gasturbine und ein Drittel auf den Dampfprozess.

Die Leistungen von üblichen GuD-Anlagen liegen im Bereich zwischen etwa 80 MW und 830 MW pro Einheit Gasturbine/Dampfturbine, wobei eine Kraftwerksanlage aus mehreren Einheiten bestehen kann. Im Vergleich dazu hat ein Block eines Kernkraftwerks üblicherweise eine Leistung zwischen 500 MW und 1.500 MW.

Die Dampfturbine der GuD-Anlage umfasst üblicherweise mehrere Druckstufen, beispielsweise eine Nieder-, Mittel- und Hochdruckstufe, die für unterschiedliche Dampfdrücke ausgelegt sind. Der im Abhitzedampferzeuger überhitzte Dampf wird dabei nach seiner Entspannung in der Hochdruckstufe der Dampfturbine erneut in den Abhitzedampferzeuger zurückgeführt und nochmals überhitzt. Dieser Dampf wird dann den nachgeschalteten Druckstufen zugeführt.

Der Dampf wird nach seiner Entspannung in der Dampfturbine üblicherweise einem Kondensator zugeführt, in dem er abgekühlt und verflüssigt wird. Das so erhaltene Wasser wird mit Hilfe einer Kondensatpumpe dem Dampfkreislauf entweder direkt oder über eine weitere Speisewasserpumpe erneut zugeführt.

Um den für den Dampfkreislauf erforderlichen Druck des Wassers zu erreichen, sind die Kondensatpumpen üblicherweise für eine vergleichsweise hohe Leistung ausgelegt. Je höher die Leistung einer Pumpe, desto höher ist jedoch auch die erforderliche Haltedruckhöhe, d. h. die erforderliche Höhe der Wassersäule am Ansaugpunkt der Pumpe. Wird die Haltedruckhöhe der Pumpe während des Betriebes unterschritten, kommt es zu einer örtlichen Unterschreitung des Verdampfungsdruckes der Förderflüssigkeit und somit zur Kavitation (Dampfbildung mit nachfolgender schlagartiger Kondensation in der Druckerhöhungszone der Pumpe). Die Kavitation kann einen Abfall der Förderleistung und des Wirkungsgrades, unruhigen Lauf und Beschädigung der Pumpeninnenteile durch Materialabtrag bewirken. Für typische Kondensatpumpen beträgt diese Höhe üblicherweise mehrere Meter.

Da die Kondensatpumpen dementsprechend um mindestens den Wert der erforderlichen Haltedruckhöhe unterhalb des Wasserstandes des Kondensatbehälters aufgestellt sein müssen, ist in der Praxis für die Kondensatpumpen eine separate tiefe Grube zur Aufstellung erforderlich. Diese tiefe Grube bedeutet für die Bauausführung bei der GuD-Anlage zusätzliche Probleme: Wegen der Nähe zum Turbinenfundament sind meist separate Baumaßnahmen erforderlich (Spundwände, Verbau), bei entsprechendem Grundwasserstand sind Maßnahmen zur Wasserhaltung und Abdichtung der Grube erforderlich.

Der Erfindung liegt daher die Aufgabe zugrunde, eine Gas- und Dampfturbinenanlage der oben genannten Art anzugeben, die einen möglichst geringen Konstruktionsaufwand erfordert.

Diese Aufgabe wird erfindungsgemäß gelöst, indem die Kondensatpumpenanordnung mehrstufig ausgeführt ist.

Die Erfindung geht dabei von der Überlegung aus, dass eine besonders einfache Konstruktion der GuD-Anlage möglich wäre, wenn die bisher notwendige tiefe Grube für die Kondensatpumpen entfallen könnte. Dabei resultiert die Tiefe dieser Grube aus der erforderlichen Haltedruckhöhe der Kondensatpumpen. Diese Haltedruckhöhe ist äquivalent zu einem Mindestdruck am Ansaugpunkt der Pumpen. Dementsprechend könnte also eine Verringerung der Höhe der Wassersäule am Ansaugpunkt der Kondensatpumpe durch eine Erhöhung des Wasserdrucks ausgeglichen werden. Eine derartige Erhöhung des Wasserdrucks ist durch die Vorschaltung einer weiteren Pumpe möglich. Dies ist erreichbar, indem die Kondensatpumpenanordnung mehrstufig ausgeführt ist, d. h. eine Mehrzahl hintereinandergeschalteter Pumpen umfasst.

In vorteilhafter Ausgestaltung umfasst die Kondensatpumpenanordnung eine Hauptkondensatpumpe und eine ihr vorgeschaltete Vorpumpe. Auf diese Weise lässt sich eine derartige Kondensatpumpenanordnung besonders einfach realisieren. Dabei kann die Hauptkondensatpumpe eine vergleichsweise hohe Leistung zur Bereitstellung eines ausreichenden Drucks für den nachgeschalteten Wasser-Dampf-Kreislauf haben, während die vorgeschaltete Vorpumpe lediglich den entsprechenden Druck am Ansaugpunkt der Hauptkondensatpumpe zur Verfügung stellen und nur eine entsprechend kleinere Leistung haben sollte. Dies hat den weiteren Vorteil, dass die Vorpumpe mit ihrer geringeren Leistung als Umwälzpumpe für die Rohrleitungsinhalte z. B. bei Anlagenstillstand verwendet werden kann, da ihr Energieverbrauch wesentlich geringer ist als der der Hauptkondensatpumpe. Somit können umfangreiche elektrische Begleitheizungen des Wasser-Dampf-Kreislaufs entfallen und die Konstruktion der GuD-Anlage vereinfacht sich weiter.

Vorteilhafterweise umfasst die Kondensatpumpenanordnung eine Mehrzahl parallel geschalteter Rohrleitungen mit jeweils einer Hauptkondensatpumpe und einer ihr vorgeschalteten Vorpumpe. Durch eine Mehrzahl paralleler Rohrleitungen ist ein besonders flexibler und sicherer Betrieb der Kondensatpumpenanordnung möglich, weiterhin ist eine derartige Anordnung besser an die jeweiligen Betriebserfordernisse anpassbar.

In vorteilhafter Ausgestaltung weist die jeweilige Vorpumpe eine maximale Zulaufhöhe von 2,5 m auf. Dies bedeutet, dass der Laufradeintritt der Vorpumpe lediglich 2,5 m unterhalb des geringstmöglichen Wasserstandes des Kondensatbehälters liegen muss. Dies entspricht etwa der Tiefe der ohnehin vorhandenen Grube für Abführrohre und -siebe des Kondensatbehälters, in der die Vorpumpe dann aufgestellt werden kann, und ein zusätzlicher Aushub für die Kondensatpumpenanordnung kann entfallen. Damit ist eine besonders einfache Konstruktion der GuD-Anlage möglich.

Vorteilhafterweise ist die jeweilige Vorpumpe als vertikale Kreiselpumpe ausgelegt. Eine derartige Pumpe ist besonders robust und betriebssicher und ermöglicht daher einen besonders sicheren Betrieb der GuD-Anlage.

Üblicherweise sind Pumpen, insbesondere Kreiselpumpen normalsaugend, d.h. Pumpe und Saugleitung müssen stets mit Fördermedium gefüllt sein, damit die Förderung nicht zusammenbricht. Da jedoch im bereits erwähnten Umwälzbetrieb der Vorpumpe vergleichsweise geringe Mengen Strömungsmedium in den Wasser-Dampf-Kreislauf gepumpt werden, sollte die Vorpumpe keine Mindestfördermenge erfordern. Dazu ist die jeweilige Vorpumpe vorteilhafterweise trockenlaufsicher ausgelegt.

In vorteilhafter Ausgestaltung ist die jeweilige Hauptkondensatpumpe antriebsseitig an einen Motor einer dem Abhitzedampferzeuger zugeordneten Speisewasserpumpe gekoppelt. Eine derartige Anordnung wird durch die größere geometrische Flexibilität und den ausreichenden Vordruck der mehrstufigen Kondensatpumpenanordnung ermöglicht. Damit können separate Motoren für die Kondensatpumpen entfallen, lediglich der Motor für die Speisewasserpumpen muss entsprechend leistungsstärker ausgelegt werden. Dadurch ist eine insgesamt einfachere und weniger aufwändige Konstruktion der GuD-Anlage möglich.

In weiterer vorteilhafter Ausgestaltung zweigt abströmseitig von der jeweiligen Vorpumpe eine Rückführleitung in den Kondensator ab. Eine derartige Rückführleitung ermöglicht einen Umwälzkreislauf, der von der Vorpumpe der Kondensatpumpenanordnung getrieben wird. Dadurch ist beispielsweise beim Anlagenstillstand ein Umwälzbetrieb möglich, der durch die vergleichsweise geringe Leistung der Vorpumpen auch wirtschaftlich vertretbar ist. Die Anlage wird somit ohne den Einsatz umständlicher Zusatzheizungen wirksam vor Frostschäden geschützt.

Gleiches ist für den der Kondensatpumpenanordnung nachgelagerten Bereich des Wasser-Dampf-Kreislaufs möglich. Dazu zweigt vorteilhafterweise von einer Zuführungsleitung einer Dampfeinspritzkühleinrichtung eine Rückführleitung in einen der Kondensatpumpenanordnung nachgeschalteten Teil des Wasser-Dampf-Kreislaufs ab. Auf diese Weise werden weitere Umwälzkreisläufe gebildet, die beispielsweise durch die im Wasser-Dampf-Kreislauf ohnehin vorhandenen vergleichsweise leistungsschwachen Entgaserpumpen angetrieben werden können. Dies ist möglich, da die in der mehrstufigen Kondensatpumpenanordnung vorgesehenen Vorpumpen einen ausreichenden Vordruck für die Entgaserpumpen zur Verfügung stellen.

Die mit der Erfindung erzielten Vorteile bestehen insbesondere darin, dass durch die mehrstufige Ausführung der Kondensatpumpenanordnung die heute übliche tiefe Grube für die Kondensatpumpe entfallen kann und somit eine wesentlich einfachere und kostengünstigere Konstruktion der GuD-Anlage möglich ist. Dieser einfachere Aufbau wird insbesondere dadurch ermöglicht, dass die erforderliche Haltedruckhöhe einer mehrstufigen Kondensatpumpenanordnung insbesondere mit einer vergleichsweise leistungsschwächeren Vorpumpe wesentlich geringer ist als in der bisher üblichen einstufigen Ausführung. Eine derartige vergleichsweise leistungsschwächere Vorpumpe kann zudem bei Anlagenstillstand als Umwälzpumpe verwendet werden, womit ein ausreichender Frostschutz ohne umfangreiche elektrische Begleitheizungen möglich ist.

Weiterhin können die Hauptkondensatpumpen direkt an die Motoren der Speisewasserpumpen gekoppelt werden und die separaten Motoren für Hauptkondensatpumpen entfallen. Zudem können durch die gute Erreichbarkeit der Vorpumpen als Inbetriebssetzungssiebe für das Strömungsmedium kostengünstige Hutsiebe eingesetzt werden.

Ein Ausführungsbeispiel der Erfindung wird anhand einer Zeichnung näher erläutert. Darin zeigen:
- FIG 1: eine schematische Darstellung eines Wasser-Dampf-Kreislaufs einer GuD-Anlage, und
- FIG 2: einen Schnitt durch die Kondensatbehältergrube einer GuD-Anlage.

Gleiche Teile sind in beiden Figuren mit denselben Bezugszeichen versehen.

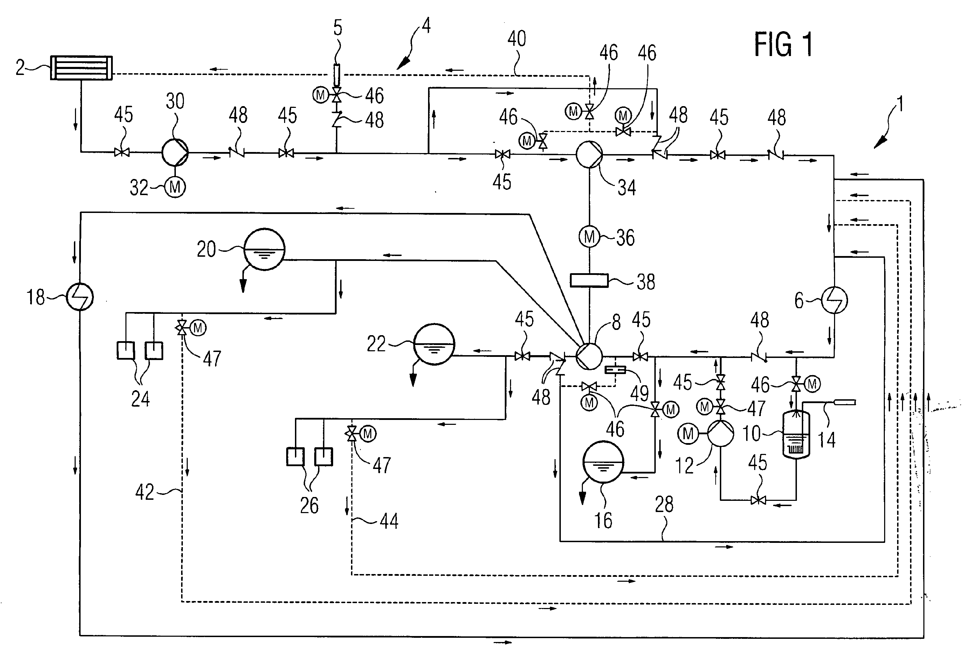

Der Wasser-Dampf-Kreislauf 1 nach der FIG 1 umfasst einen Kondensator 2, in dem der in der Dampfturbine entspannte Dampf gesammelt und in flüssiges Wasser umgewandelt wird. Dieses Wasser wird dem Wasser-Dampf-Kreislauf 1 anschließend wieder zugeführt. Dazu ist dem Kondensator 2 eine Kondensatpumpenanordnung 4 nachgeschaltet, die das Wasser mit dem notwendigen Druck in den nachgeschalteten Teil des Wasser-Dampf-Kreislaufs 1 pumpt. Die Kondensatpumpenanordnung umfasst ein Druckhaltesystem 5, mit Hilfe dessen eine redundante Druckhaltung für die der Kondensatpumpenanordnung 4 nachgeschaltete Vorwärmeinrichtung 6 erzielt werden kann.

Anschließend an die Vorwärmeinrichtung 6 mündet die Rohrleitung in die Speisewasserpumpe 8, die das Wasser auf die verschiedenen nachgelagerten Rohrsystem verteilt. Zwischen Vorwärmeinrichtung 6 und Speisewasserpumpe 8 ist dabei ein Entgaser 10 mit einer ihm zugeordneten Entgaserpumpe 12 parallel geschaltet. Im Entgaser wird das im Wasser gelöste Gas entfernt, welches andernfalls eine rasche Korrosion der Rohrsysteme der GuD-Anlage zur Folge hätte. Die Entgasung kann beispielsweise durch thermisches Entgasen mittels aus einer Zuführleitung 14 eingespeisten Dampfes erfolgen. Durch das Erhitzen verringert sich nämlich die Löslichkeit der Gase im Wasser.

Der Speisewasserpumpe 8 vorgeschaltet ist weiterhin ein Rohrabzweig zur Niederdruckdampftrommel 16, welche den Dampf für die Niederdruckstufe der Dampfturbine zur Verfügung stellt. Die Speisewasserpumpe 8 pumpt das Strömungsmedium im Wasser-Dampf-Kreislauf 1 auf die verschiedenen weiteren nachgelagerten Rohrsysteme. Ein Teil des Wassers wird beispielsweise einer Brennstoffvorwärmeinrichtung 18 für die Gasturbine zugeleitet und anschließend wieder in einen der Kondensatpumpenanordnung 4 nachgelagerten Bereich zurückgeführt.

Ein weiterer Teil des Wassers wird jeweils der Mitteldruckdampftrommel 20 und der Hochdruckdampftrommel 22 zugeführt, die der Mitteldruck- bzw. Hochdruckstufe der Dampfturbine zugeordnet sind. Dabei ist in jedem Rohrsystem jeweils ein Abzweig zum Mitteldruckeinspritzwassersystem 24 bzw. Hochdruckeinspritzwassersystem 26 vorgesehen. Mittels dieser Einspritzwassersysteme kann der Dampf für die Dampfturbine bedarfsgerecht konditioniert werden.

Weiterhin ist eine Rückführleitung 28 abzweigend vom Rohrleitungssystem zur Hochdruckdampftrommel 22 vorgesehen, welche auch bei kleiner benötigter Fördermenge einen ausreichenden Mindestmassenstrom durch die Speisewasserpumpe 8 zur Verfügung stellt.

Um die Druckerfordernisse das Wasser-Dampf-Kreislaufs 1 zu erfüllen, muss die Kondensatpumpenanordnung 4 eine vergleichsweise hohe Leistung aufweisen. Um die erforderliche Haltedruckhöhe der Kondensatpumpenanordnung 4 gering zu halten und den entsprechenden Konstruktionsaufwand wegen der daraus resultierenden Höhenunterschiede zwischen Kondensatpumpenanordnung 4 und Kondensator 2 zu vermeiden, ist die Kondensatpumpenanordnung 4 mehrstufig ausgeführt. Dem Kondensator 2 ist dazu zunächst eine Vorpumpe 30 nachgeschaltet, die über einen separaten Motor 32 angetrieben wird. Die Vorpumpe 30 hat eine vergleichsweise geringe Leistung und dementsprechend eine geringe erforderliche Zulaufhöhe von etwa 2,5 m. Sie ist als vertikale Kreiselpumpe ausgelegt und stellt einen ausreichenden Vordruck für die Hauptkondensatpumpe 34 zur Verfügung, welche den für den nachgelagerten Bereich des Wasser-Dampf-Kreislaufs 1 erforderlichen Druck bereitstellt. Da die erforderliche Zulaufhöhe der Hauptkondensatpumpe 34 durch den Vordruck der Vorpumpe 30 gegeben ist, ist die geometrische Anordnung der Hauptkondensatpumpe 34 sehr flexibel. Dementsprechend kann die Hauptkondensatpumpe 34 vom gleichen Motor 36 wie die mit ihm verbundene Speisewasserpumpe 8 angetrieben werden. Dabei kann der Motor 36 mit der Speisewasserpumpe 8 wie gezeigt als mögliche Ausführung über eine hydraulische Kupplung 38 verbunden sein.

Da die Vorpumpe 30 eine vergleichsweise geringe Leistung hat und trockenlaufsicher ausgelegt ist, ist es wirtschaftlich vertretbar und möglich, die Vorpumpe 30 als Umwälzpumpe im Frostschutzbetrieb während eines Anlagenstillstands zu betreiben. Dazu ist eine Rückführleitung 40 vorgesehen, welche abströmseitig von der Vorpumpe 30 in den Kondensator 2 abzweigt und so einen ersten Umwälzkreislauf bildet.

Für den der Hauptkondensatpumpe 34 nachgelagerten Bereich des Wasser-Dampf-Kreislaufs 1 wird die Entgaserpumpe 12 als Umwälzpumpe genutzt. Dazu sind Rückführleitungen 42 und 44 vorgesehen, welche im Bereich der Mitteldruckeinspritzwassersysteme 24 bzw. Hochdruckeinspritzwassersysteme 26 abzweigen und in einen der Kondensatpumpenanordnung 4 nachgeschalteten Bereich führen. Zur bedarfsgerechten Regelung des Stroms des Strömungsmediums umfasst der Wasser-Dampf-Kreislauf dabei eine Anzahl von Absperrschiebern 45, Absperrventilen 46, Drosselventilen 47, Rückschlagklappen 48 und Blenden 49.

Durch die praktisch vollständige Umwälzung des im Wasser-Dampf-Kreislauf 1 vorhandenen Wassers können aufwändige Zusatzheizungen entfallen und es ist ein insgesamt einfacherer und kostengünstigerer Aufbau der GuD-Anlage möglich.

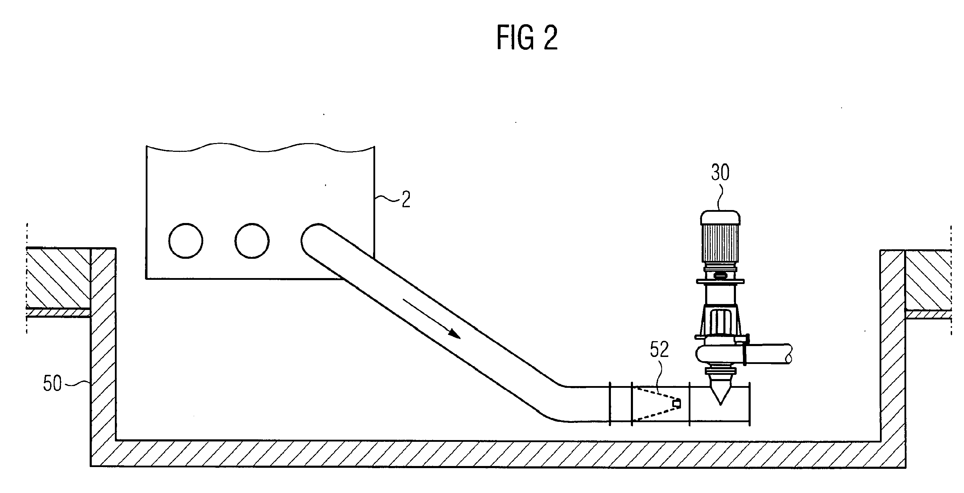

FIG 2 zeigt die geometrische Anordnung des Kondensators 2 und der Vorpumpe 30. Durch die vergleichsweise geringe Haltedruckhöhe der Vorpumpe kann die Tiefe der Kondensatpumpengrube 50 vergleichsweise gering gehalten werden, die Vorpumpe ist in der ohnehin vorhandenen Kondensatpumpengrube 50 für Abführrohre und -siebe des Kondensatbehälters aufgestellt. Durch die gute geometrische Erreichbarkeit ist es zudem möglich, als Inbetriebssetzungssiebe vergleichsweise kostengünstige Hutsiebe 52 einzusetzen.

## Patentansprüche

1. Gas- und Dampfturbinenanlage mit einem der Gasturbine rauchgasseitig nachgeschalteten Abhitzedampferzeuger, dessen Heizflächen in den Wasser-Dampf-Kreislauf (1) der Dampfturbine geschaltet sind, wobei der Wasser-Dampf-Kreislauf (1) einen Kondensator (2) mit einer nachgeschalteten Kondensatpumpenanordnung (4) umfasst, und wobei die Kondensatpumpenanordnung (4) mehrstufig ausgeführt ist.

2. Gas- und Dampfturbinenanlage nach Anspruch 1, bei der die Kondensatpumpenanordnung (4) eine Hauptkondensatpumpe (34) und eine ihr vorgeschaltete Vorpumpe (30) umfasst.

3. Gas- und Dampfturbinenanlage nach Anspruch 1 oder 2, bei der die Kondensatpumpenanordnung (4) eine Mehrzahl parallel geschalteter Rohrleitungen mit jeweils einer Hauptkondensatpumpe (34) und einer ihr vorgeschalteten Vorpumpe (30) umfasst.

4. Gas- und Dampfturbinenanlage nach einem der Ansprüche 1 bis 3, bei der die jeweilige Vorpumpe (30) eine maximale Zulaufhöhe von 2,5 m aufweist.

5. Gas- und Dampfturbinenanlage nach einem der Ansprüche 1 bis 4, bei der die jeweilige Vorpumpe (30) als vertikale Kreiselpumpe ausgelegt ist.

6. Gas- und Dampfturbinenanlage nach einem der Ansprüche 1 bis 5, bei der die jeweilige Vorpumpe (30) trockenlaufsicher ausgelegt ist.

7. Gas- und Dampfturbinenanlage nach einem der Ansprüche 1 bis 6, bei der die jeweilige Hauptkondensatpumpe (34) antriebsseitig an einen Motor (32) einer dem Abhitzedampferzeuger zugeordneten Speisewasserpumpe gekoppelt ist.

8. Gas- und Dampfturbinenanlage nach einem der Ansprüche 1 bis 7, bei der abströmseitig von der jeweiligen Vorpumpe (30) eine Rückführleitung (28) in den Kondensator (2) abzweigt.

9. Gas- und Dampfturbinenanlage nach einem der Ansprüche 1 bis 8, bei der von einer Zuführungsleitung (14) einer Dampfeinspritzkühleinrichtung eine Rückführleitung (28) in einen der Kondensatpumpenanordnung (4) nachgeschalteten Teil des Wasser-Dampf-Kreislaufs (1) abzweigt.
